Europäisches Patentamt

European Patent Office

Office européen des brevets

(19)

(11) EP 1 422 539 A2

## (12) EUROPEAN PATENT APPLICATION

(43) Date of publication:
26.05.2004 Bulletin 2004/22

(51) Int Cl.⁷: **G02B 6/12**, G02B 6/293

(21) Application number: 03015591.5

(22) Date of filing: 14.07.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **25.11.2002 KR 2002073406**

(71) Applicant: SAMSUNG ELECTRONICS CO., LTD.
**Suwon-City, Kyungki-do (KR)**

(72) Inventors:
• **Young-Hoon, Kim,
Samsung Electronics Co., Ltd.
Suwon-city, Kyungki-do (KR)**

• **Sun-Tae, Jung, Samsung Electronics Co., Ltd.
Suwon-city, Kyungki-do (KR)**
• **Dong-Kyoon, Han,
Samsung Electronics Co., Ltd.
Suwon-city, Kyungki-do (KR)**

(74) Representative: **Lang, Johannes, Dipl.-Ing. et al
Bardehle Pagenberg Dost Altenburg Geissler,
Postfach 86 06 20
81633 München (DE)**

## (54) Wavelength division multiplexer/demultiplexer

(57)     Disclosed is a wavelength division multiplexer/ demultiplexer provided with a grating for demultiplexing a multiplexed optical signal to single-channel optical signals, an input waveguide for inputting the optical signal to the grating, and output waveguides for outputting the optical signals demultiplexed by the grating, wherein the input waveguide comprises: a first sub-waveguide, in which its width is gradually increased in a progressing direction of the optical signal; and a second sub-waveguide, in which its width is gradually decreased in the progressing direction of the optical signal passing through the first sub-waveguide. Since the inputted optical signal within the increased portion of the input waveguide has an expended bandwidth and the inputted optical signal within the decreased portion of the input waveguide has a reduced side lobe, the wavelength division multiplexer/demultiplexer of the present invention prevents an interference effect generated between neighboring channels and improves quality of the optical signal transmitted and received in a wavelength division multiplexed (WDM) optical communication network.

FIG.2

EP 1 422 539 A2

## Description

BACKGROUND OF THE INVENTION

1. Field of the Invention

The present invention relates to an optical communication device used in wavelength division multiplexed (WDM) optical communication networks, and more particularly to a wavelength division multiplexer/demultiplexer for multiplex-ing/demultiplexing optical signals.

2. Description of the Related Art

Generally, in a WDM optical communication network used for transmitting mass data, optical signals including multiple channels are simultaneously transmitted via a single strand of an optical fiber. A transmitting terminal of the WDM network serves to multiplex an optical signal, and a receiving terminal of the WDM network serves to receive the multiplexed optical signal and then separate the received signal into optical signals of different wavelengths so as to change the received signal into respective electrical signals. In a WDM optical communication network based on a single-mode optical fiber, an Arrayed Waveguide Grating (AWG) using a planar lightwave circuit (PLC) technique is used in a wavelength division multiplexer/demultiplexer. The planer lightwave circuit comprises a substrate made of silicon or quartz, and a plurality of silica layers or polymer thin films deposited on the substrate.

In demultiplexing the optical signal in the WDM optical communication network, a shape of an input waveguide of the multiplexed optical signal determines a bandwidth and a quality of the optical signal.

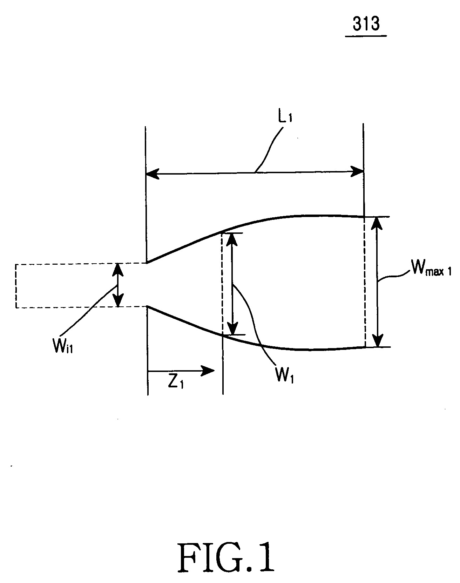

Fig. 1 is a schematic view of an input waveguide of a conventional wavelength division multiplexer/demultiplexer. As shown in Fig. 1, the input waveguide 313 of the conventional wavelength division multiplexer/demultiplexer inputs a multiplexed optical signal to a grating of the wavelength division multiplexer/demultiplexer. However, in case that the wavelength division multiplexer/demultiplexer is operated as a demultiplexer, the input waveguide 313 outputs the multiplexed optical signal.

The input waveguide 313 has a parabolic horn shape, in which its width ($W_1$) is gradually increased in a progressing direction of the optical signal. A variation of the width ($W_1$) of the input waveguide 313 is determined by the below Equation 1, and the shape of the input waveguide 313 is defined by the below Equation 2.

[Equation 1]

$$\frac{1}{2}\frac{dW_1}{dz} = -\gamma\,\frac{4\pi}{3}\,\frac{\lambda_g}{W_{i1}}$$

[Equation 2]

$$W_1 = (2\alpha\lambda_g z_1 + W_{i1}^2)^{1/2},\,\alpha = -\frac{8\pi\gamma}{3}$$

Herein, $z_1$ denotes a distance from an input terminal of the input waveguide 31 to a position of the progressing optical signal, $W_1$ is a width of the input waveguide 313 at the position of the progressing optical signal, $W_{i1}$ is a width of the input waveguide 313 at the input terminal, $\lambda_g$ denotes an effective wavelength of the optical signal, $\gamma$ denotes a coupling coefficient of the fundamental and higher modes of the optical signal.

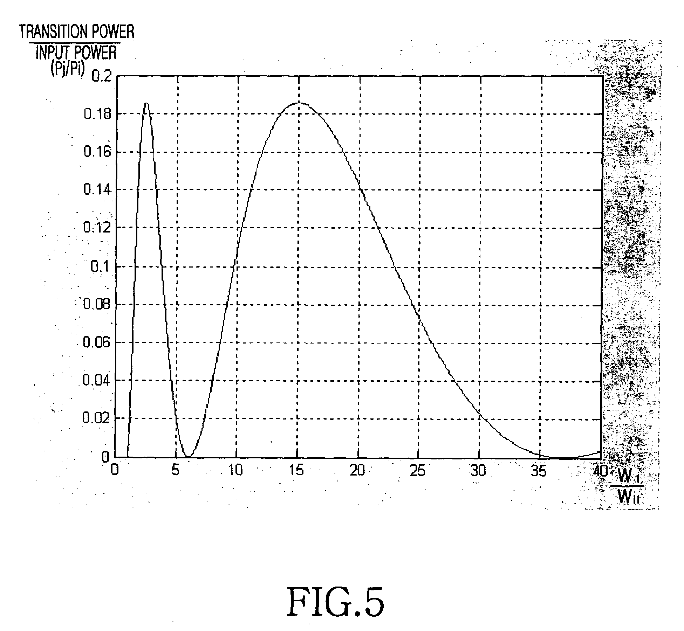

When the multiplexed optical signal progresses along the parabolic horn type input waveguide 313, the mode coupling of the optical signal from the fundamental mode to the secondary mode or the higher mode occurs, and the bandwidth of the optical signal is expanded. Further, upon the mode coupling of the optical signal from the fundamental mode to the higher mode, the optical signal has a flat field profile. The below Equation 3 is a relation illustrating a relationship between the coupling coefficient created by the optical signal progressing along the input waveguide 313 and the maximum value of power ($P_j$) of the optical signal coupled from the fundamental mode to the higher mode. Fig. 5 is a graph illustrating a power ($P_j$) profile of the coupled optical signal from the fundamental mode to the higher mode as the multiplexed optical signal progresses along the input waveguide 313.

[Equation 3]

$$\frac{P_j}{P_0} = \frac{4\gamma^2}{4\gamma^2 + 1} = \frac{(3\alpha/4\pi)^2}{(3\alpha/4\pi)^2 + 1}$$

Herein, $P_j$ denotes a power of an optical signal coupled from the fundamental mode to the higher mode, $P_0$ denotes a power of an optical signal initially inputted to the input waveguide 313. As shown in Equation 3 and Fig. 5, the power ($P_j$) of the optical signal coupled from the fundamental mode to the higher mode varies according to the width ($W_{i1}$) of the input waveguide 313 at the input terminal and the width ($W_1$) of the input waveguide 313 at a certain position.

The above-described conventional parabolic horn type input waveguide 313 has several problems. That is, as the bandwidth of the optical signal is expanded, the optical signal is interfered with an optical signal of a neighboring channel, thereby being depreciated in quality. Further, since the mode coupling of the optical signal from the fundamental mode to the higher mode occurs, a side lobe is generated. The interference between the neighboring channels generated by the side lobe is a leading factor depreciating the quality of the optical signal.

## SUMMARY OF THE INVENTION

Therefore, the present invention has been made in view of the above problems, and it is an object of the present invention to provide a wavelength division multiplexer/demultiplexer with an input waveguide having a designated configuration such that a side lobe generated by the mode coupling from the fundamental mode to the higher mode is reduced, thereby expanding the bandwidth of the multiplexed optical signal and preventing quality deterioration of the signal during demultiplexing.

In accordance with one aspect of the present invention, the above and other objects can be accomplished by the provision of a wavelength division multiplexer/demultiplexer provided with a grating for demultiplexing a multiplexed optical signal to single-channel optical signals, an input waveguide for inputting the optical signal to the grating, and output waveguides for outputting the optical signals demultiplexed by the grating, wherein the input waveguide comprises: a first sub-waveguide, in which its width is gradually increased in a progressing direction of the optical signal; and a second sub-waveguide, in which its width is gradually decreased in the progressing direction of the optical signal passing through the first sub-waveguide.

In accordance with another aspect of the present invention, there is provided a wavelength division multiplexer/demultiplexer used in a planar lightwave circuit (PLC) provided with an arrayed waveguide grating having a plurality of optical waveguides, an input waveguide for inputting a multiplexed optical signal to the grating, and output waveguides for outputting single-channel optical signals demultiplexed by the grating, wherein the input waveguide comprises: a first sub-waveguide, in which its width is gradually increased in a progressing direction of the optical signal; and a second sub-waveguide, in which its width is gradually decreased in the progressing direction of the optical signal passing through the first sub-waveguide.

## BRIEF DESCRIPTION OF THE DRAWINGS

The above and other objects, features and other advantages of the present invention will be more clearly understood from the following detailed description taken in conjunction with the accompanying drawings, in which:

Fig. 1    is a schematic view of an input waveguide of a conventional wavelength division multiplexer/demultiplexer;

Fig. 2    is a schematic view of an input waveguide of a wavelength division multiplexer/demultiplexer in accordance with a preferred embodiment of the present invention;

Fig. 3    is a perspective view of one example of a wavelength division multiplexer/demultiplexer employing the input waveguide of Fig. 2;

Fig. 4    is a perspective view of another example of a wavelength division multiplexer/demultiplexer employing the input waveguide of Fig. 2;

Fig. 5    is a graph illustrating the operating characteristics of the input waveguide of the conventional wavelength division multiplexer/demultiplexer of Fig. 1;

Fig. 6    is a graph illustrating the output characteristics of the input waveguide of the conventional wavelength division multiplexer/demultiplexer of Fig. 1;

Fig. 7    is a graph illustrating the output characteristics of the input waveguide of the wavelength division multiplexer/demultiplexer of Fig. 2; and

Fig. 8    is a graph comparatively illustrating the output characteristics of the input waveguides of the wavelength division multiplexers/demultiplexers of Figs. 1 and 2.

## DETAILED DESCRIPTION OF THE PREFERRED EMBODIMENTS

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may make the subject matter of the present invention rather unclear.

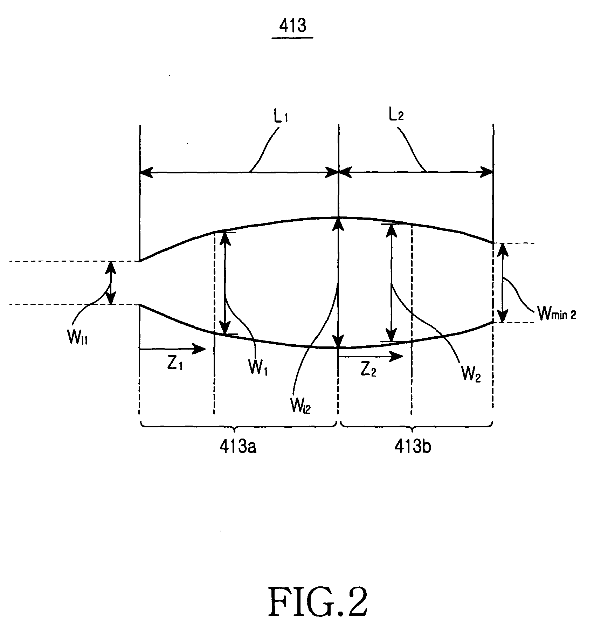

Fig. 2 shows an input waveguide 413 of a wavelength division multiplexer/demultiplexer in accordance with a preferred embodiment of the present invention. As shown in Fig. 2, the input waveguide 413 of the wavelength division multiplexer/demultiplexer comprises a first sub-waveguide 413a and a second sub-waveguide 413b. The first sub-waveguide 413a has a parabolic horn shape, in which its width ($W_1$) is gradually increased in a progressing direction of an optical signal. The second sub-waveguide 413b is extended from an end of the first sub-waveguide 413a and has a designated shape, in which its width ($W_2$) is gradually decreased in a progressing direction of the optical signal passing through the first sub-waveguide 413a.

As aforementioned, the first sub-waveguide 413a has the parabolic horn shape, in which its width ($W_1$) is gradually increased in the progressing direction of the optical signal, and the shape of the first sub-waveguide 413a is defined by the below Equation 4.

[Equation 4]

$$W_1 = (2\alpha\lambda_g z_1 + W_{i1}^2)^{1/2}, \ \alpha = -\frac{8\pi\gamma}{3}$$

Herein, $z_1$ denotes a distance from an input terminal of the first sub-waveguide 413a to a position of a progressing optical signal, $W_1$ is a width of the first sub-waveguide 413a at the position of the progressing optical signal, $W_{i1}$ is a width of the first sub-waveguide 413a at the input terminal, $\lambda_g$ denotes an effective wavelength of the optical signal, and $\gamma$ denotes a coupling coefficient of the fundamental and higher modes of the optical signal.

When a multiplexed optical signal progresses along the parabolic horn type first sub-waveguide 413a, the mode coupling of the optical signal from the fundamental mode to the higher mode more than the secondary mode occurs, and the bandwidth of the optical signal is expanded. Further, upon the mode coupling of the optical signal from the fundamental mode to the higher mode, the optical signal has a flat field profile.

The second sub-waveguide 413b has a designated shape, in which its width ($W_2$) is gradually decreased in the progressing direction of the optical signal, and the shape of the second sub-waveguide 413b is variously defined by the below Equations 5 to 7.

[Equation 5]

$$W_2 = (W_{i2}^2 - 2\alpha\lambda_g z_2)^{1/2}, \; \alpha = -\frac{8\pi\gamma}{3}$$

[Equation 6]

$$W_2 = \gamma \left[1 - \exp\left(\frac{-z_2}{\alpha}\right)\right] + W_{i2}, \; \alpha = -\frac{8\pi\gamma}{3}$$

[Equation 7]

$$W_2 = 2\alpha z_2 + W_{i2}, \; \alpha = -\frac{8\pi\gamma}{3}$$

In the above Equations 5 to 7, $z_2$ denotes a distance from the end of the first sub-waveguide 413a to a position of a progressing optical signal, $W_2$ is a width of the second sub-waveguide 413b at the position of the progressing optical signal, $W_{i2}$ is a width of the second sub-waveguide 413b at the contact point of the first and second sub-waveguides 413a and 413b, $\lambda_g$ denotes an effective wavelength of the optical signal, and $\gamma$ denotes a coupling coefficient of the fundamental and higher modes of the optical signal.

According to the above Equation 5, the second sub-waveguide 413b has a parabolic horn shape, in which its width ($W_2$) is gradually decreased in the progressing direction of the optical signal. According to the above Equation 6, the second sub-waveguide 413b has a tapered shape, in which its width ($W_2$) is gradually decreased in the progressing direction of the optical signal along a curve of an exponential function. Further, according to the above Equation 7, the second sub-waveguide 413b has a tapered shape, in which the width ($W_2$) is linearly decreased in the progressing direction of the optical signal.

The first sub-waveguide 413a is shaped such that its width ($W_1$) is gradually increased in the progressing direction of the optical signal. Therefore, in the first sub-waveguide 413a, the mode coupling of an input multiplexed optical signal from the fundamental mode to the higher mode occurs, and a bandwidth of the optical signal is expanded. Herein, the expanded bandwidth of the multiplexed optical signal is assured, but the optical signal is interfered with an optical signal of a neighboring channel due to a side lobe generated by the higher mode. Therefore, quality of the optical signal within the first sub-waveguide 413a is deteriorated.

The optical signal passing through the first sub-waveguide 413a is inputted to the second sub-waveguide 413b.

The second sub-waveguide 413b is shaped such that its width ($W_2$) is gradually decreased in a progressing direction of the optical signal, and as above-described, the shape of the second sub-waveguide 413b is variously defined by Equations 5 to 7.

Since the width ($W_1$) of the first sub-waveguide 413a is gradually increased in the progressing direction of the optical signal, the mode coupling of the optical signal from the fundamental mode to the higher mode occurs within the first sub-waveguide 413a. On the other hand, since the width ($W_2$) of the second sub-waveguide 413b is gradually decreased in the progressing direction of the optical signal, the mode coupling of the optical signal from the higher mode to the fundamental mode occurs within the second sub-waveguide 413b. Therefore, the side lobe generated by the higher mode optical signal in the high mode is reduced.

Herein, the bandwidth of the optical signal passing through the first and second sub-waveguides 413a and 413b and being inputted to a grating of the wavelength division multiplexer/demultiplexer is determined by a width ($W_{min2}$) of an end of the second sub-waveguide 413b. Therefore, the bandwidth of the multiplexed optical signal being inputted to the wavelength division multiplexer/demultiplexer is sufficiently assured by adjusting the width ($W_{min2}$) of the end of the second sub-waveguide 413b, and simultaneously the side lobe causing the interference with the neighboring channels is reduced.

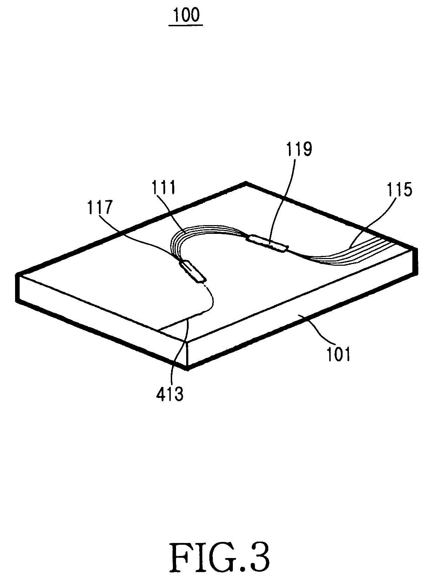

Fig. 3 is a perspective view of one example of a wavelength division multiplexer/demultiplexer employing the input waveguide of Fig. 2. As shown in Fig. 3, the wavelength division multiplexer/demultiplexer 100 comprises a substrate 101 made of silicon or quartz, an arrayed waveguide grating 111 formed on the substrate 101, an input waveguide 413 formed on one side of the substrate 101, and a plurality of output waveguides 115 formed on the other side of the substrate 101. Slab waveguides 117 and 119 are respectively formed between the input waveguide 413 and the arrayed waveguide grating 111 and between the output waveguides 115 and the arrayed waveguide grating 111.

In case that a multiplexed optical signal is inputted to the wavelength division multiplexer/demultiplexer 100 via the input waveguide 413 and then outputted from the wavelength division multiplexer/demultiplexer 100 via the output waveguides 115, the wavelength division multiplexer/demultiplexer 100 serves to perform a demultiplexing function. That is, the multiplexed optical signal is inputted to the wavelength multiplexer/demultiplexer 100 via the input waveguide 413, and the inputted optical signal is demultiplexed into respective channels by the arrayed waveguide grating 111 and outputted from the wavelength multiplexer/demultiplexer 100 via the respective output waveguides 115.

On the other hand, in case that a plurality of optical signals with different wavelengths are inputted to the wavelength division multiplexer/demultiplexer 100 via the out waveguides 115 and then outputted from the wavelength division multiplexer/demultiplexer 100 via the input waveguide 413, the wavelength division multiplexer/demultiplexer 100 serves to perform a multiplexing function. That is, single-channel optical signals are inputted to the wavelength multiplexer/demultiplexer 100 via the respective output waveguides 115, and the inputted optical signals are multiplexed into a multichannel optical signal by the arrayed waveguide grating 111 and outputted from the wavelength multiplexer/demultplexer 100 via the input waveguide 413.

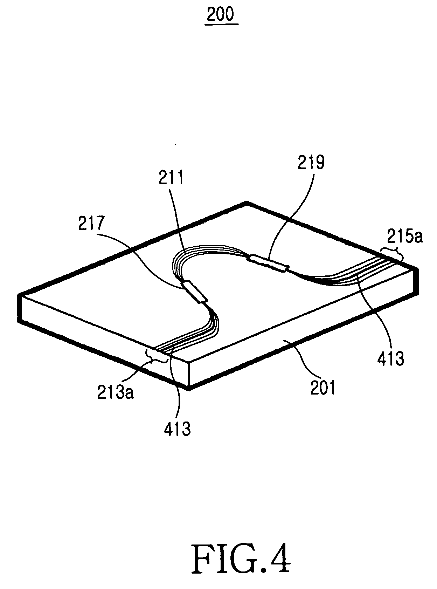

Fig. 4 is a perspective view of another example of a wavelength division multiplexer/demultiplexer employing the input waveguide of Fig. 2, and more particularly a bi-directional wavelength division multiplexer/demultiplexer employing the input waveguide of Fig. 2. As shown in Fig. 4, the bi-directional wavelength division multiplexer/demultiplexer 200 comprises a substrate 201 made of silicon or quartz, an arrayed waveguide grating 211 formed on the substrate 101, a plurality of waveguides 213a and 215a respectively formed on both sides of the substrate 201. Slab waveguides 217 and 219 are respectively formed between the arrayed waveguide grating 211 and the waveguides 213a and between the arrayed waveguide grating 211 and the waveguides 215a. The waveguides 213a and the 215a include a multi-channel waveguide 413 for transmitting a multiplexed optical signal and single-channel waveguides for transmitting a single-channel signal.

The multiplexed optical signal being inputted via the multi-channel waveguide 413 on one side of the substrate 201 is demultiplexed into a plurality of single-channel optical signals by the arrayed waveguide grating 211, and the demultiplexed optical signals are outputted via the corresponding waveguides 215a on the other side of the substrate 201. Further, The multiplexed optical signal being inputted via the multi-channel waveguide 413 on the other side of the substrate 201 is demultiplexed into a plurality of single-channel optical signals by the arrayed waveguide grating 211, and the demultiplexed optical signals are outputted via the corresponding waveguides 213a on one side of the substrate 201.

Single-channel optical signals are respectively inputted to the above-described bi-directional wavelength division multiplexer/demultiplexer 200 via the waveguides 213a on one side, and multiplexed by the arrayed waveguide grating 211, and the multiplexed optical signal is outputted from the bi-directional wavelength division multiplexer/demultiplexer 200 via the multi-channel waveguide 413 on the other side. Further, single-channel optical signals are respectively inputted to the bi-directional wavelength division multiplexer/demultiplexer 200 via the waveguides 215a on the other side, and multiplexed by the arrayed waveguide grating 211, and the multiplexed optical signal is outputted from the bi-directional wavelength division multiplexer/demultiplexer 200 via the multi-channel waveguide 413 on one side.

That is, since a plurality of the waveguides 213a and 215a for inputting and outputting a single-channel optical signal and at least one multi-channel waveguide 413 are arranged in parallel on the both sides of the bi-directional wavelength division multiplexer/demultiplexer 200 centering on the arrayed waveguide grating 211, the above bi-directional wavelength division multiplexer/demultiplexer 200 can bi-directionally multiplex and demultiplex optical signals.

The aforementioned input waveguide 413 may be applied to a reflex diffraction grating as well as a planar lightwave circuit (PLC) used in a wavelength division multiplexer/demultiplexer.

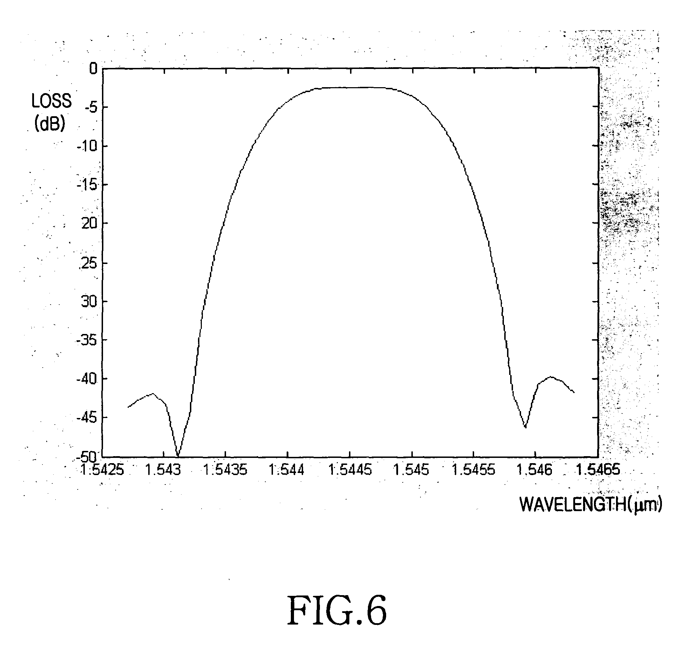

Hereinafter, with reference to Figs. 6 to 8, spectrums of optical signals, which are inputted to the arrayed waveguide grating via the conventional input waveguide 313 and the input waveguide 413 of the present invention, demultiplexed, and then outputted, will be described.

Fig. 6 is a graph illustrating a spectrum of optical signals obtained by inputting a multiplexed optical signal to the arrayed waveguide grating by the conventional parabolic horn type input waveguide 313 in which its width is gradually increased in the progressing direction of the optical signal, demultiplexing the inputted optical signal, and outputting the demultiplexed signals. As shown in Fig. 6, in case an optical signal having a center wavelength of 1544.5 $\mu$m is inputted to the arrayed wavelength grating via the conventional input waveguide 313, a side lobe occurs at wavelength bands of approximately 1543 $\mu$m and approximately 1546 $\mu$m. Such side lobe generation due to the higher mode also occurs in the first sub-waveguide 413a of the present invention.

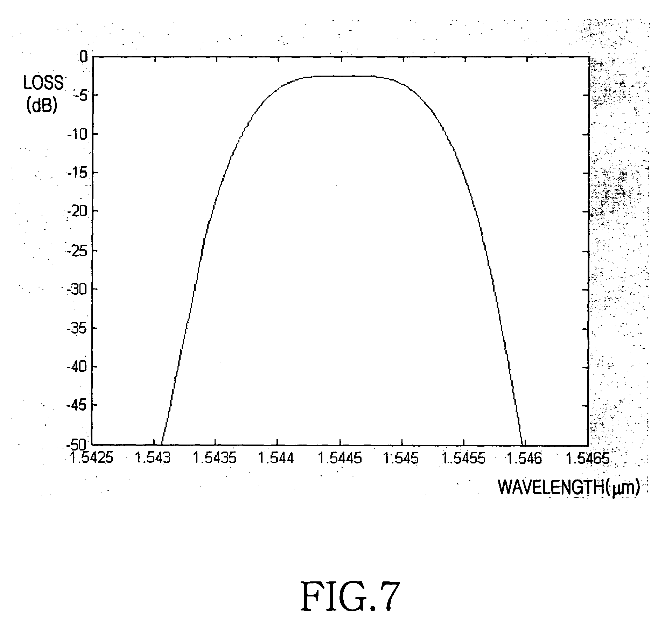

The optical signal having the spectrum shown in Fig. 6 by progressing along the first sub-waveguide 413a is coupled from the higher mode to the fundamental mode within the second sub-waveguide 413b. Thereby, the side lobe is reduced. Fig. 7 is a graph illustrating a spectrum of optical signals obtained by inputting the multiplexed optical signal to the arrayed waveguide grating via the second sub-waveguide 413b defined by the above Equation 5, demultiplexing the inputted optical signal, and outputting the demultiplexed signals. Compared to the optical signal spectrum of Fig. 6, the side lobe is greatly reduced in the optical signal spectrum obtained by means of the input waveguide 413 of the present invention shown in Fig. 7.

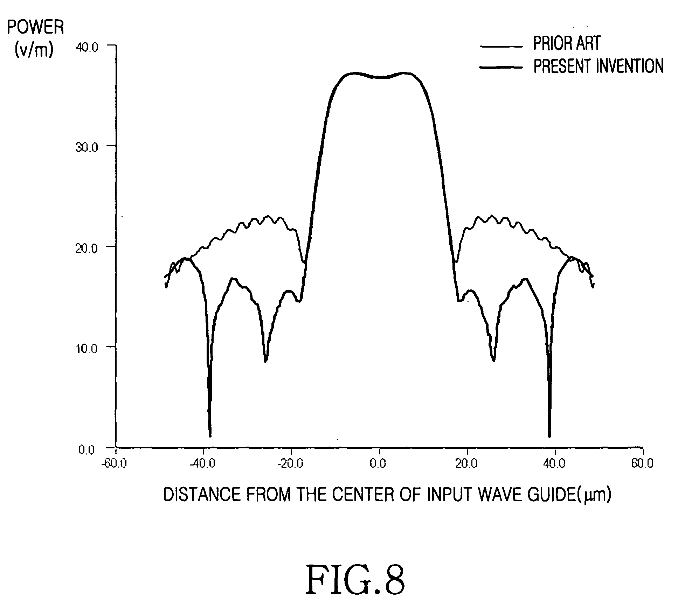

Fig. 8 is a graph showing field profiles of the optical signal inputted to the arrayed waveguide grating via the conventional input waveguide 313 and the optical signal inputted to the arrayed waveguide grating via the input waveguide 413 of the present invention, respectively. As shown in Fig. 8, the side lobe is generated at positions deviated from the center of the input waveguide by approximately ±18 μm in both optical signals progressing along the conventional input waveguide 313 and the input waveguide 413 of the present invention. Compared to the optical signal progressing along conventional input waveguide 313, the optical signal progressing along the input waveguide 413 of the present invention has the same bandwidth but a reduced side lobe. Particularly, the side lobe generated at positions deviated from the center of the input waveguide 413 by ±24 μm, being adjacent to neighboring channels, is reduced by about 5dB. The reduction of the side lobe decreases an interference effect of the optical signal with the neighboring channels.

As apparent from the above description, the present invention provides a wavelength division multiplexer/demultiplexer comprising an input waveguide of a shape such that its width is gradually increased in a progressing direction of an optical signal to a designated distance and then gradually decreased in the progressing direction of the optical signal. Therefore, since the inputted optical signal within the increased portion of the input waveguide has an expended bandwidth and the inputted optical signal within the decreased portion of the input waveguide has a reduced side lobe, the wavelength division multiplexer/demultiplexer of the present invention prevents an interference effect generated between neighboring channels. As a result, the present invention improves quality of the optical signal transmitted and received in a wavelength division multiplexed (WDM) optical communication network.

Although only a few embodiments of the present invention have been described in detail, those skilled in the art will appreciate that various modifications, additions, and substitutions to the specific elements are possible, without departing from the scope and spirit of the invention as disclosed in the accompanying claims.

## Claims

1. A wavelength division multiplexer/demultiplexer provided with a grating for demultiplexing a multiplexed optical signal to single-channel optical signals, an input waveguide for inputting the optical signal to the grating, and output waveguides for outputting the optical signals demultiplexed by the grating,
wherein the input waveguide comprises:

a first sub-waveguide, in which its width is gradually increased in a progressing direction of the optical signal; and
a second sub-waveguide, in which its width is gradually decreased in the progressing direction of the optical signal passing through the first sub-waveguide.

2. The wavelength division multiplexer/demultiplexer as set forth in claim 1, wherein the first sub-waveguide has a parabolic horn shape.

3. The wavelength division multiplexer/demultiplexer as set forth in claim 1, wherein the second sub-waveguide has a designated shape, in which its width is linearly decreased in the progressing direction of the optical signal passing through the first sub-waveguide.

4. The wavelength division multiplexer/demultiplexer as set forth in claim 1, wherein the second sub-waveguide has a parabolic horn shape, in which its width is gradually decreased in the progressing direction of the optical signal passing through the first sub-waveguide.

5. The wavelength division multiplexer/demultiplexer as set forth in claim 1, wherein a shape of the first sub-waveguide is defined by the Equation 8,

[Equation 8]

$$W_1 = (2\alpha\lambda_g z_1 + W_{i1}^2)^{1/2}, \; \alpha = -\frac{8\pi\gamma}{3},$$

wherein, $z_1$ denotes a distance from an input terminal of the first sub-waveguide to a position of a progressing optical signal, $W_1$ is a width of the first sub-waveguide at the position of the progressing optical signal, $W_{i1}$ is a width of the first sub-waveguide at the input terminal, $\lambda_g$ denotes an effective wavelength of the optical signal, and $\gamma$ denotes a coupling coefficient of the fundamental and higher modes of the optical signal.

6. The wavelength division multiplexer/demultiplexer as set forth in claim 1, wherein a shape of the second sub-waveguide is defined by the Equation 9,

[Equation 9]

$$W_2 = (W_{i2}^2 - 2\alpha\lambda_g z_2)^{\frac{1}{2}}, \ \alpha = -\frac{8\pi\gamma}{3},$$

wherein, $z_2$ denotes a distance from the end of the first sub-waveguide to a position of a progressing optical signal, $W_2$ is a width of the second sub-waveguide at the position of the progressing optical signal, $W_{i2}$ is a width of the second sub-waveguide at the contact point of the first and second sub-waveguides, $\lambda_g$ denotes an effective wavelength of the optical signal, and $\gamma$ denotes a coupling coefficient of the fundamental and higher modes of the optical signal.

7. The wavelength division multiplexer/demultiplexer as set forth in claim 1, wherein a shape of the second sub-waveguide is defined by the Equation 10,

[Equation 10]

$$W_2 = \gamma\left[1 - \exp\left(\frac{-z_2}{\alpha}\right)\right] + W_{i2}, \ \alpha = -\frac{8\pi\gamma}{3},$$

wherein, $z_2$ denotes a distance from the end of the first sub-waveguide to a position of a progressing optical signal, $W_2$ is a width of the second sub-waveguide at the position of the progressing optical signal, $W_{i2}$ is a width of the second sub-waveguide at the contact point of the first and second sub-waveguides, and $\gamma$ denotes a coupling coefficient of the fundamental and higher modes of the optical signal.

8. The wavelength division multiplexer/demultiplexer as set forth in claim 1, wherein a shape of the second sub-waveguide is defined by the Equation 11,

[Equation 11]

$$W_2 = 2\alpha z_2 + W_{i2}, \ \alpha = -\frac{8\pi\gamma}{3}$$

wherein, $z_2$ denotes a distance from the end of the first sub-waveguide to a position of a progressing optical signal, $W_2$ is a width of the second sub-waveguide at the position of the progressing optical signal, $W_{i2}$ is a width of the second sub-waveguide at the contact point of the first and second sub-waveguides, and $\gamma$ denotes a coupling coefficient of the fundamental and higher modes of the optical signal.

9. A wavelength division multiplexer/demultiplexer used in a planar lightwave circuit (PLC) provided with an arrayed waveguide grating having a plurality of optical waveguides, an input waveguide for inputting a multiplexed optical signal to the grating, and output waveguides for outputting single-channel optical signals demultiplexed by the grating, wherein the input waveguide comprises:

a first sub-waveguide, in which its width is gradually increased in a progressing direction of the optical signal; and
a second sub-waveguide, in which its width is gradually decreased in the progressing direction of the optical signal passing through the first sub-waveguide.

10. The wavelength division multiplexer/demultiplexer as set forth in claim 9, wherein the first sub-waveguide has a parabolic horn shape.

11. The wavelength division multiplexer/demultiplexer as set forth in claim 9, wherein the second sub-waveguide has a designated shape, in which its width is linearly decreased in the progressing direction of the optical signal passing through the first sub-waveguide.

12. The wavelength division multiplexer/demultiplexer as set forth in claim 9, wherein the second sub-waveguide has a parabolic horn shape, in which its width is gradually decreased in the progressing direction of the optical signal passing through the first sub-waveguide.

13. The wavelength division multiplexer/demultiplexer as set forth in claim 9, wherein the input waveguide comprising the first and second sub-waveguides is respectively disposed on both sides of the substrate centering on the arrayed waveguide grating, and the output waveguides arranged in parallel with the input waveguide are respectively disposed on both sides of the substrate centering on the arrayed waveguide grating.

313

FIG.1

<u>413</u>

FIG.2

100

FIG.3

200

FIG.4

FIG.5

FIG.6

FIG.7

FIG.8